# EUROPÄISCHE PATENTANMELDUNG

(11) **EP 1 337 064 A1**
(43) Veröffentlichungstag der Anmeldung: **20.08.2003**
(21) Anmeldenummer: 02003321.3
(22) Anmeldetag: 13.02.2002
(51) Int. Cl.: H04L 1/06, H04B 7/08

(54) **Methode zum Beamforming eines Mehrnutzerempfängers mit Kanalschätzung**

(71) Anmelder: SIEMENS AKTIENGESELLSCHAFT, 80333 München (DE)
(72) Erfinder: Frey, Thomas, Dr., 89081 Ulm (DE); Kiessling, Mario, 89075 Ulm (DE); Reinhardt, Markus, Dr., 89231 Neu-Ulm (DE); Viering, Ingo, 89075 Ulm (DE)

(57) **Zusammenfassung**

Die Anmeldung betrifft ein Beamforming-Verfahren für einen Mehrnutzerempfänger mit Antennenarray. Nach einer Kanalschätzung werden eine Kovarianzmatrix und deren Eigennwerte bestimmt, woraus durch eine Auswahl (AUS) Antennengewichte (AGEW) berechnet werden. Aus den Antennengewichten und den Kanalschätzungen wird dann ein Beamformingsignal (BFS) gewonnen. In einer Transformationstufe (T) werden dann korrigierte Kanalschätzungen bestimmt, die in einem Maximum-Ratio-Combining-Verfahren, Zero-Forcing-Verfahren oder einem Joint-Detection-Verfahren (JDET) zur Datenschätzung verwendet werden. Anwendungsbeispiele sind UTRA-TDD und UTRA-FDD- Übertragungssysteme.

## Beschreibung

Verfahren zur Bildung eines einer Kanaldecodierung zugeführten skalaren Entscheidungssignals, das mit Hilfe einer Kanalschätzung und eines Beamforming-Verfahrens aus Antennensignalen eines Funkkommunikationssystems gewonnenen wird.

Die Erfindung betrifft ein Verfahren gemäß den Merkmalen des ersten Patentanspruchs.

Bei Funkkommunikationssystemen mit mehreren Nutzern wird zur Empfangsverbesserung ein aus mehreren Einzelantennen bestehendes Antennensystem in Kombination mit einem sogenannten Mehrantennen-Empfänger eingesetzt. Über die Einzelantennen werden Antennensignale der Einzelantennen an den Mehrantennen-Empfänger weitergeleitet.

Durch die Verwendung von mehreren Einzelantennen, bzw. durch den dadurch entstehenden Kohärenzgewinn innerhalb des Mehrantennen-Empfängers, ist es möglich, niedrigere Signal-Störabstande bei den Antennensignalen für systembedingt vorgegebene Qualitätsanforderungen zuzulassen. Jedoch sind diese Antennensignale für ein durchzuführendes Kanalschätzungs-Verfahren bzw. für ein durchzuführendes Beamforming-Verfahren nur bedingt geeignet, da die durch Rauschen gestörten Antennensignale bei beiden Verfahren ungenaue Ergebnisse verursachen.

Bei bekannten Mehrantennen-Empfängern ist das Beamforming-Verfahren im sogenannten Signalpfad angeordnet, auf dem hohe Datenraten vorherrschen, während die Kanalschätzung in einem Kanalschätzpfad erfolgt. Sowohl Ausgangssignale des Kanalschätzpfads als auch des Signalpfads werden zur Bildung eines skalaren Entscheidungssignals verwendet, das einer Kanaldecodierung bzw. einer Bitentscheidung zugeführt wird und funktionsbestimmend für den Mehrantennen-Empfänger ist.

Eine derartige Struktur ist beispielsweise auch beim sogenannten Einzelantennen-Empfänger realisierbar, der jedoch innerhalb eines betriebenen Funkkommunikationssystems im allgemeinen aus hardware- und softwarespezifischen Gründen nicht ohne weiteres zu einem Mehrantennen-Empfänger erweitert werden kann.

Die Aufgabe der vorliegenden Erfindung besteht darin, eine Empfängerstruktur zur Bildung eines skalaren Entscheidungssignals derart zu gestalten, dass die Empfängerstruktur sowohl in einem Mehrantennen-Empfänger als auch in einem Einzelantennen-Empfänger einsetzbar ist und der Einzelantennenempfänger nachträglich mit nur geringem Aufwand zu einem Mehrantennen-Empfänger erweiterbar ist.

Die Aufgabe der Erfindung wird durch die Merkmale des Anspruchs 1 gelöst. Vorteilhafte Weiterbildungen der Erfindung sind in den Unteransprüchen angegeben.

Durch die erfindungsgemäße Verlagerung des Beamforming-Verfahrens in den Kanalschätzpfad, in dem niedrigere Datenraten vorherrschen, wird eine nachträgliche Erweiterung eines Einzelantennen-Empfängers zu einem Mehrantennenempfänger auf einfache Art ermöglicht, denn:
- die Funktionen des Kanalschätzpfads werden mit Hilfe von digitalen Bausteinen realisiert und sind somit jederzeit leicht nachjustierbar bzw. erweiterbar, und
- im Erweiterungsfall wird zur Bildung des Entscheidungssignals nur noch die Hardware des Signalpfads entsprechend angepasst.

Die für das Beamforming-Verfahren erforderliche Rechenzeit wird ebenfalls reduziert, da im Kanalschätzpfad, verglichen mit dem Signalpfad, niedrigere Datenraten zu bearbeiten sind.

Vergleichend zum Stand der Technik, bei dem im allgemeinen zwei Pilotkorrelationen bzw. zwei Kanalschätzungen durchgeführt werden, ist beim erfindungsgemäßen Verfahren nur eine Kanalschätzung bzw. nur eine Pilotkorrelation zur Bildung des Entscheidungssignals notwendig.

Durch das erfindungsgemäße Verfahren werden die durch Rauschen ungenauen Kanalschätzungen, die auf den einzelnen Antennensignalen basieren, verbessert und es werden Langzeiteigenschaften des Kanals bei der Kanalschätzung vorteilhaft ausgenutzt.

Im Folgenden wird ein Ausführungsbeispiel der Erfindung anhand einer Zeichnung näher erläutert. Dabei zeigt:
- FIG 1: als prinzipielles Schaltbild ein Verfahren zur Bildung eines skalaren Entscheidungssignals ENTS bei einem Mehrantennenempfänger, gemäß dem Stand der Technik,
- FIG 2: als prinzipielles Schaltbild ein weiteres Verfahren zur Bildung eines skalaren Entscheidungssignals ENTS bei einem Mehrantennenempfänger, gemäß dem Stand der Technik,
- FIG 3: als prinzipielles Schaltbild ein erfindungsgemäßes Verfahren zur Bildung eines skalaren Entscheidungssignals ENTS bei einem Mehrantennenempfänger,
- FIG 4: vergleichend zu FIG 3 ein erstes Ausführungsbeispiel des erfindungsgemäßen Verfahrens zur Bildung eines skalaren Entscheidungssignals ENTS bei einem Mehrantennenempfänger, und
- FIG 5: vergleichend zu FIG 3 ein zweites Ausführungsbeispiel des erfindungsgemäßen Verfahrens zur Bildung eines skalaren Entscheidungssignals ENTS bei einem Mehrantennenempfänger.

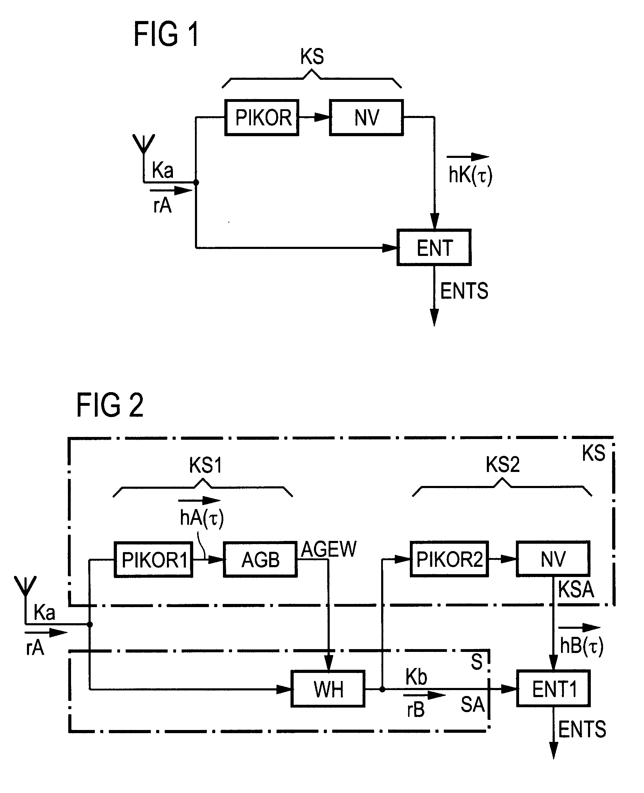

FIG 1 zeigt als prinzipielles Schaltbild ein Verfahren zur Bildung eines skalaren Entscheidungssignals ENTS bei einem Mehrantennenempfänger, gemäß dem Stand der Technik.

Es werden Ka Antennensignale von Ka Einzelantennen einer Antennenanordnung empfangen. Diese gelangen einerseits über einen Pilotkorrelator PIKOR und über eine nachfolgend angeordnete Nachverarbeitung NV und andererseits direkt an eine Einrichtung ENT, mit deren Hilfe das Entscheidungssignal ENTS gebildet wird. Das Entscheidungssignal ENTS wird dabei für jeden Nutzer des Funkkommunikationssystems gebildet und ist somit sowohl kanalspezifisch als auch nutzerspezifisch.

Mit dem Pilotkorrelator PIKOR und mit der Nachverarbeitung NV wird eine Kanalschätzung KS durchgeführt, mit deren Hilfe Kanalimpulsantworten hK als kanalspezifische Parameter ermittelt werden.
Bei der Nachverarbeitung NV werden beispielsweise anhand einer Schwellenentscheidung störende Rauschanteile bei den Ausgangssignalen des Pilotkorrelators PIKOR entfernt.

Zur Bildung des Entscheidungssignals ENTS werden die Ka Antennesignale mit Hilfe der Kanalimpulsantworten hK miteinander kombiniert bzw. adaptiv gefiltert. Realisiert wird dies beispielsweise je nach Ausbildung des Funkkommunikationssystems durch ein "Maximum-Ratio-Combining"-Verfahren, "Joint-Detection"-Verfahren, den Einsatz eines "Wiener"-Filters oder durch ein "Zero-Forcing"-Verfahren. Dabei wird eine gemeinsame Detektion mehrerer Nutzer sowohl in Raum-, Zeit- als auch in Nutzerrichtung ermöglicht.

Derartige Verfahren werden bevorzugt bei TDD-Funkkommunikationssystemen eingesetzt, während der Einsatz bei FDD-Funkkommunikationssystemen nur mit großem Rechenaufwand realisiert werden kann.

Bei der Verwendung einer aus mehreren Einzelantennen bestehenden Antennenanordnung werden durch den systembedingten Antennengewinn geringere Signal-Störabstände bei den empfangenen Ka Antennensignalen tolerierbar, jedoch werden die durchzuführende Kanalschätzung KS und die Bildung des Entscheidungssignals ENTS durch die im allgemeinen stark verrauschten Ka Antennensignale nachteilig gestört und damit ungenauer.

FIG 2 zeigt als prinzipielles Schaltbild ein weiteres Verfahren zur Bildung eines skalaren Entscheidungssignals ENTS bei einem Mehrantennenempfänger, gemäß dem Stand der Technik.

Vergleichend zu FIG 1 nutzt dieser Mehrantennenempfänger Langzeiteigenschaften eines Kanals aus. Es gelangen Ka Antennensignale von Ka Einzelantennen einer Antennenanordnung als Eingangssignale sowohl an einen Kanalschätzpfad KS als auch an einen Signalpfad S.

Die Eingangssignale des Kanalschätzpfads KS gelangen an einen ersten Pilotkorrelator PIKOR1, mit dessen Hilfe Antennenimpulsantworten hA berechnet werden. Aus den Antennenimpulsantworten hA werden mit Hilfe einer Antennengewichtsberechnung AGB nutzerspezifische Antennengewichte AGEW berechnet. Mit Hilfe des ersten Pilotkorrelators PIKOR1 und der Antennengewichtsberechnung AGB wird eine erste Kanalschätzung KS1 durchgeführt.

Die Eingangssignale des Signalpfad S gelangen zusammen mit den berechneten Antennengewichten AGEW an einen im Signalpfad S angeordneten Beamformer WH, mit dessen Hilfe Beamsignale rB berechnet werden. Die Beamsignale rB gelangen einerseits als Ausgangssignale SA des Signalpfades S an eine Einrichtung ENT1, mit deren Hilfe das Entscheidungssignal ENTS gebildet wird, und andererseits an einen zweiten Pilotkorrelator PIKOR2. Ausgangssignale des zweiten Pilotkorrelators PIKOR2 gelangen nach einer Nachverarbeitung NV als Beamimpulssignale hB als Ausgangssignale KSA des Kanalschätzpfads KS ebenfalls an die Einrichtung ENT1. Mit Hilfe des zweiten Pilotkorrelators PIKOR2 und der Nachverarbeitung NV wird eine zweite Kanalschätzung KS2 durchgeführt.

Vergleichend mit FIG 1 werden zwei Kanalschätzungen KS1 und KS2 durchgeführt, wobei die aus FIG 1 bekannte Struktur in der Anordnung des ersten Pilotkorrelators PIKOR1, der Nachverarbeitung NV und des Beamformers WH zu sehen ist.

Mit Hilfe der ersten Kanalschätzung KS1 werden schnelle Fading-Eigenschaften der Kanäle gemittelt und Langzeiteigenschaften der Kanäle ausgenutzt. Die Beamsignale rB zeichnen sich durch einen höheren Signal-Störabstand aus. Bei der Bildung des Entscheidungssignals ENTS werden Kurzzeiteigenschaften des Kanals berücksichtigt.

Als mögliche Verfahren zur Antennengewichtsberechnung AGB sind Verfahren wie Eigen-Beamforming, Fixed-Beamforming, hybrides Beamforming sowie richtungsbasierende Verfahren bekannt. Die Antenenngewichte AGEW können trotz stark verrauschter Kanalschätzung auf den einzelnen Antennenelementen exakt bestimmt werden und stellen anschaulich einen oder mehrere Antennenbeams dar.

Die Bildung des Entscheidungssignals ENTS erfolgt beispielsweise wieder mit Hilfe eines Maximum-Ratio-Combining-Verfahrens oder eines Joint-Detection ähnlichen Verfahrens, wie beispielsweise dem Partial-Joint-Detection-Verfahren.

Bei diesem Mehrantennen-Empfänger ist als Nachteil zu nennen, dass die räumliche Signalverarbeitung weitgehend getrennt ist von der restlichen Signalverarbeitung.
Beim Joint-Detection-Verfahren, bei dem Raum, Zeit und Nutzer gemeinsam verarbeitet werden, ist eine derartige Empfängerstruktur im allgemeinen nicht anwendbar.
Das Beamforming WH erfolgt hier im Signalpfad, auf dem üblicherweise hohe Datenraten vorherrschen, wodurch erhöhte Rechenzeiten und Probleme bei der Hardware- bzw. Softwarerealisierung verursacht werden.

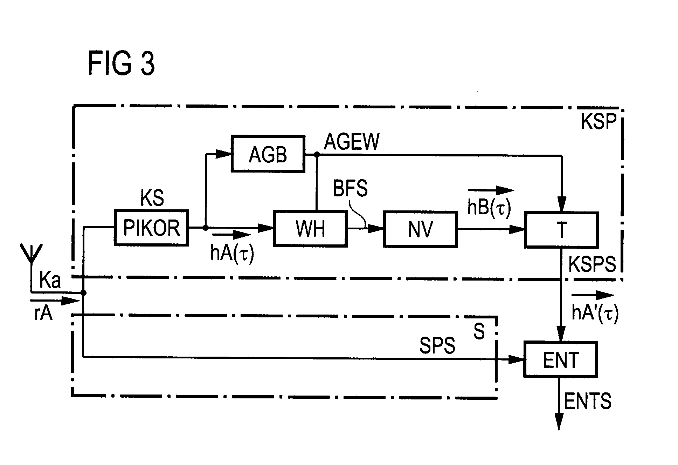

FIG 3 zeigt als prinzipielles Schaltbild ein erfindungsgemäßes Verfahren zur Bildung eines skalaren Entscheidungssignals ENTS bei einem Mehrantennenempfänger.

Es gelangen Ka Antennensignale von Ka Einzelantennen einer Antennenanordnung als Eingangssignale einerseits an einen Kanalschätzpfad KSP und anderseits an einen Signalpfad SP.
Die Eingangssignale des Kanalschätzpfades KSP werden einem Pilotkorrelator PIKOR zugeführt, mit dessen Hilfe eine Kanalschätzung KS durchgeführt wird und nutzerspezifische Antennenimpulsantworten hA gebildet werden. Mit Hilfe der nutzerspezifischen Antennenimpulsantworten hA wird eine Antennengewichtsberechnung AGB zur Bestimmung von Antennenngewichten AGEW durchgeführt.

Mit Hilfe der berechneten Antennengewichte AGEW und der Antennenimpulsantworten hA wird ein Beamforming WH durchgeführt, dessen Ausgangssignale als Beamformingsignale BFS einer Nachverarbeitung NV zugeführt werden. Mit Hilfe der Nachverarbeitung NV werden Beamimpulsantworten hB gebildet, die an einen Transformator T gelangen.

Der Transformator T dient der Rücktransformation der Beamimpulsantworten hB in den Antennenbereich und bildet mit Hilfe der Beamimpulssignale hB und der berechneten Antennengewichte AGEW korrigierte nutzerspezifische Impulsantworten hA', die als Ausgangssignale KSPS des Kanalschätzpfads KSP den Antennenimpulsantworten hA nachgebildet sind.

Sowohl die Ka Antennensignale des Signalpfads als auch die korrigierten Impulsantworten hA' werden einer Einrichtung ENT zur Bildung des Entscheidungssignals ENTS zugeführt.
Die Bildung des Entscheidungssignals ENTS erfolgt mit Hilfe von adaptiven Filter-Kombinierungsfunktionen, je nach Ausbildung des Funkkommunikationssystems beispielsweise durch ein "Maximum-Ratio-Combining"-Verfahren, "Joint-Detection"-Verfahren, dem Einsatz eines "Wiener"-Filters oder durch ein "Zero-Forcing"-Verfahren.

Vergleichend zur FIG 2 ist das Beamforming WH aus dem Signalpfad SP in den Kanalschätzpfand KSP verlagert worden, wobei bei dem erfindungsgemäßen Verfahren nur noch eine Pilotkorrelation PIKOR durchgeführt wird.

Da innerhalb des Kanalschätzpfades KSP vergleichend zum Signalpfad SP geringere Datenraten auftreten, ist ein derartiger Mehrantennen-Empfänger leicht zu realisieren bzw. zu erweitern.

Erfindungsgemäß werden die berechneten Antennengewichte AGEW sowie die Transformation T jeweils auf die gesamten Antennenimpulsantworten hA, also auf jeden einzelnen Wert, angewendet.

Alternativ sind dazu bei der Antennegewichtsberechnung AGB folgende Erweiterungen möglich:
a.) Für jeden einzelnen Wert der Antennenimpulsantwort hA wird ein eigenes Set an Antennengewichtsfaktoren AGEW und eine Transformation T berechnet, die dann jeweils nur auf den jeweiligen Wert angewendet werden.
b.) Die Werte der Antennenimpulsantworten werden gruppiert und für jede einzelne Gruppe wird ein Set von Antennengewichten und eine Transformation T berechnet, die dann jeweils auf jeden Wert dieser Gruppe angewendet werden.

Erfindungsgemäß können anstelle der linearen adaptiven Filter-Kombinierungsfunktionen bei der Bildung des Entscheidungssignals auch grundsätzlich nicht lineare Strukturen wie "Decision-Feedback" oder "Interference-Cancellation" usw. verwendet werden. Diese sind im allgemeinen mehrstufig und werden durch das erfindungsgemäße Verfahren ebenfalls verbessert, indem der Kanalschätzpfad jeder Stufe mit der beschriebenen Struktur entsprechend erweitert wird.

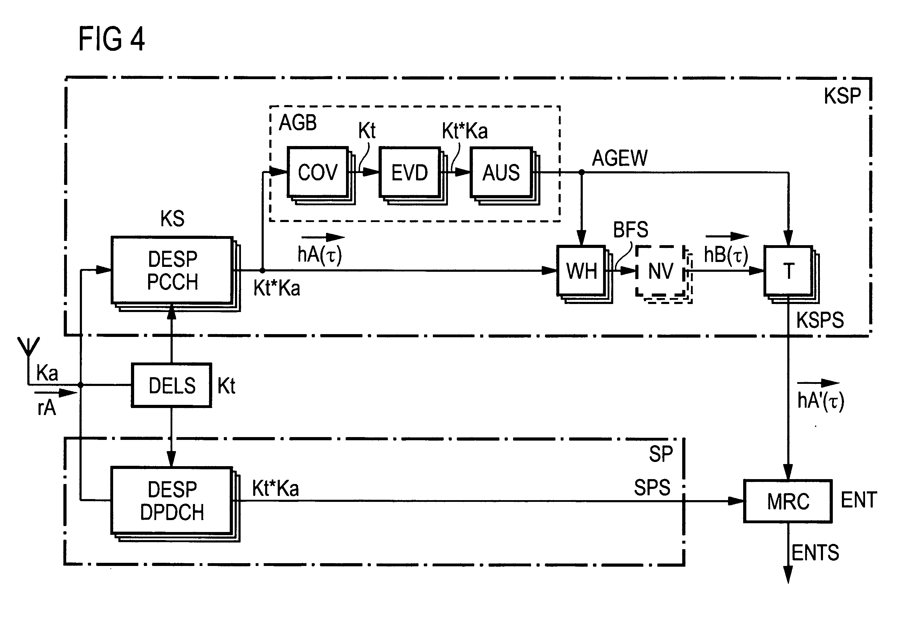

FIG 4 zeigt vergleichend zu FIG 3 ein erstes Ausführungsbeispiel des erfindungsgemäßen Verfahrens zur Bildung eines skalaren Entscheidungssignals ENTS bei einem Mehrantennenempfänger. Dabei wird ein UTRA-FDD-Funkkommunikationssystem vorausgesetzt.

Die Ka Antennesignale gelangen an einen Delay-Seacher DELS, mit dessen Hilfe der Pilotkorrelator DESP des Kanalschätzpfades KSP nutzerspezifische DPCCH-Kanäle entspreizt und Antennenimpulsantworten hA erzeugt, die einerseits zur Antennengewichtsberechnung AGB und andererseits zum Beamforming WH verwendet werden. Dabei beinhaltet jede einzelne nutzerspezifische Antennenimpulsantwort Kt*Ka Antennenkoeffizienten, wobei Kt mit Hilfe des Delay-Searchers DELS lagenabhängig von Energiemaxima bestimmt wird.

Die Antennengewichtsberechnung AGB erfolgt dabei mit Hilfe von Kovarianzmatrixschätzungen COV, Eigenwertzerlegungen EVD und einem Auswahlverfahren AUS. Die berechneten Antennengewichte AGEW werden mit den Antennenimpulsantworten hA dem Beamformer WH zugeführt, dessen Ausgangssignale als Beamformingsignale BFS über eine hier nicht notwendige Nachverarbeitung NV als Beamimpulsantworten hB dem Transformator T zugeführt werden.
Die mit Hilfe des Transformators T gebildeten korrigierten Impulsantworten hA' gelangen an die Einrichtung ENT zur Bildung des Entscheidungssignals ENTS, das hier mit Hilfe eines Maximum-Ratio-Combiners MRC gebildet wird.

Bei den Eingangssignalen des Signalpfads SP werden mit Hilfe des Delay-Searchers DELS nutzerspezifische DPDCH-Kanäle entspreizt (DESP) und Kt*Ka Antennen-Delay-Signale berechnet, die zusammen mit den korrigierten Impulsantworten hA' zur Bildung des Entscheidungssignals ENTS verwendet werden.

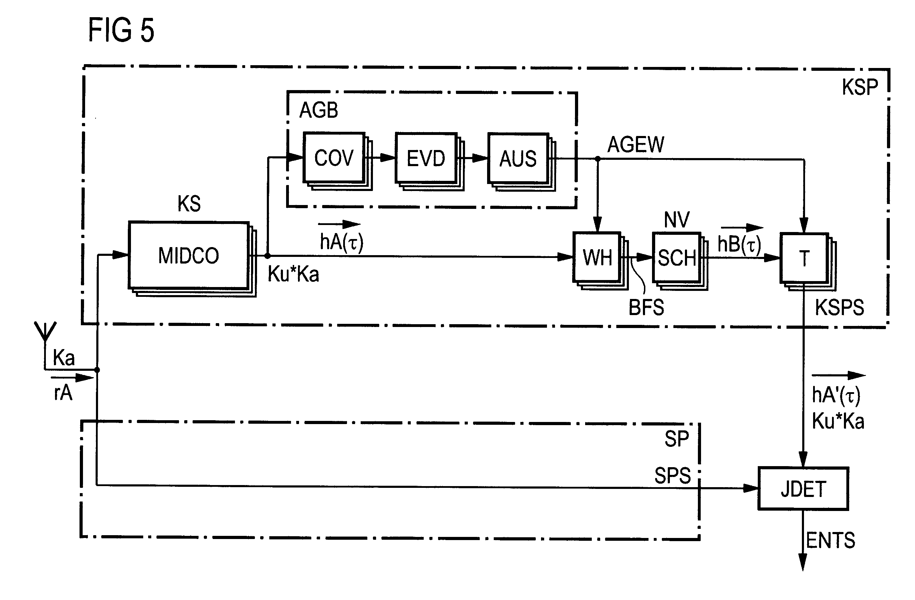

FIG 5 zeigt vergleichend zu FIG 3 ein zweites Ausführungsbeispiel des erfindungsgemäßen Verfahrens zur Bildung eines skalaren Entscheidungssignals ENTS bei einem Mehrantennenempfänger. Dabei wird ein UTRA-TDD-Funkkommunikationssystem vorausgesetzt.

Die Pilotkorrelation PIKOR erfolgt hier mit Hilfe einer Midambelkorrelation MIDCO. Die Antennengewichtsberechnung AGB erfolgt wieder mit Hilfe von Kovarianzmatrixschätzungen COV, Eigenwertzerlegungen EVD und einem Auswahlverfahren AUS. Mit Hilfe des Auswahlverfahrens AUS werden beispielsweise nur maximale Leistungen von Nutzern weiterverfolgt.

Die Nachverarbeitung NV bildet ein Schwellenentscheider SCH, während die Bildung des Entscheidungssignals ENTS mit Hilfe eines Joint-Detectors JDET erfolgt.

Auf jedes der Ka Antennensignale werden für jeden einzelnen von Ku Nutzern durch Midamblekorrelation insgesamt Ku*Ka Antennenimpulsantworten hA ermittelt, für die anschließend für jeden einzelnen Nutzer eine Kovarianzmatrix geschätzt wird. Eine geeignete Untermenge an Eigenwerten jeder Kovarianzmatrix wird zunächst als Transformation auf die zugehörige Impulsantwort angewendet.

Die Schwellenentscheidung SCH setzt anschließend kleine Werte der Impulsantwort, die in der Regel nur Rauschanteile darstellen, auf den Wert Null. Mit Hilfe der Transformation T wird schließlich eine stark verbesserte Kanalschätzung erreicht. Der Joint-Detector JDET an sich wird herkömmlich, jedoch mit weniger verrauschten Impulsantworten, betrieben.

## Patentansprüche

1. Verfahren zur Bildung eines einer Kanaldecodierung zugeführten skalaren Entscheidungssignals (ENTS), das mit Hilfe einer Kanalschätzung (KS) und mit Hilfe eines Beamforming-Verfahrens (WH) aus Ka Antennensignalen eines Funkkommunikationssystems gewonnen wird,
- bei dem die Ka Antennensignale von Ka Einzelantennen als Eingangssignale sowohl an einen Kanalschätzpfad (KSP) als auch an einen dazu parallelen Signalpfad (SP) zur Bildung eines jeweiligen Ausgangssignals (KSPS,SPS) gelangen,
- bei dem im Kanalschätzpfad (KSP) zur Bildung des Ausgangssignals (KSPS) an den Ka Antennensignalen zunächst die Kanalschätzung (KS) und nachfolgend das Beamforming-Verfahren (WH) durchgeführt wird, und
- bei dem aus den Ausgangssignalen (KSPS,SPS) des Signalpfads (SP) und des Kanalschätzpfads (KSP) das skalare Entscheidungssignal (ENTS) gebildet wird.

2. Verfahren nach Anspruch 1, bei dem das skalare Entscheidungssignal (ENTS) mit Hilfe einer adaptiven Filter-Kombinierungsfunktion gebildet wird.

3. Verfahren nach Anspruch 1 oder 2, bei dem im Kanalschätzpfad (KSP) mit Hilfe eines Pilotkorrelationsverfahrens (PIKOR) aus den Ka Antennensignalen nutzerspezifische Antennenimpulsantworten (hA) gebildet werden, die einerseits zur Berechnung von nutzerspezifischen Antennengewichten (AGEW) und andererseits zur Durchführung des Beamforming-Verfahrens (WH) verwendet werden.

4. Verfahren nach Anspruch 3, bei dem die berechneten Antennengewichte (AGEW) einerseits zur Durchführung des Beamforming-Verfahrens (WH) verwendet und andererseits einer Transformation (T) unterzogen werden.

5. Verfahren nach Anspruch 3 oder 4, bei dem mit Hilfe des Beamforming-Verfahrens (WH) nutzerspezifische Beamformingsignale (BFS) gebildet werden, die nach einer Nachverarbeitung (NV) als Beamimpulsantworten (hB) der Transformation (T) zugeführt werden.

6. Verfahren nach Anspruch 4 oder 5, bei dem mit Hilfe der Transformation (T) aus den Beamimpulsantworten (hB) und aus den berechneten Antennengewichten (AGEW) nutzerspezifische, den Antennenimpulsantworten (hA) nachgebildete, korrigierte Impulsantworten (hA') als Ausgangssignale (KSPS) des Kanalschätzpfads (KSP) erzeugt werden.

7. Verfahren nach einem der vorhergehenden Ansprüche, bei dem für Ku Nutzer die nutzerspezifischen Antennengewichte (AGEW) mit Hilfe von Kovarianzmatrix-Schätzungen (COV), Eigenwertzerlegungen (EVD) und einem Auswahlverfahren (AUS) bestimmt werden.

8. Verfahren nach einem der vorhergehenden Ansprüche, **gekennzeichnet durch** die Verwendung in einem UTRA-TDD-Funkkommunikationssystem.

9. Verfahren nach Anspruch 8, bei dem als Pilotkorrelationsverfahren (PIKOR) eine Midamble-Korrelation (MIDCO) zur Bildung von Ku*Ka Antennenimpulsantworten (hA) von Ku Nutzern verwendet wird.

10. Verfahren nach Anspruch 8 oder 9, bei dem die Nachverarbeitung (NV) der Beamformingsignale (BFS) mit Hilfe einer Schwellenentscheidung (SCH) erfolgt.

11. Verfahren nach einem der Ansprüche 8 bis 10, bei dem bei der Bildung des Entscheidungssignals (ENTS) als adaptive Filter-Kombinierungsfunktion ein Joint-Detection-Verfahren (JDET) verwendet wird, wobei Ku*Ka korrigierte Impulsantworten (hA') einerseits und Ka Antennensignale andererseits die Ausgangssignale (KSPS,SPS) des Kanalschätzpfads (KSP) einerseits und des Signalpfads (SP) andererseits bilden.

12. Verfahren nach Anspruch 7, **gekennzeichnet durch** die Verwendung in einem UTRA-FDD-Funkkommunikationssystem.

13. Verfahren nach Anspruch 12, bei dem beim Pilotkorrelationsverfahren mit Hilfe eines Delay-Searchers (DELS), dem die Ka Antennensignale zugeführt sind, den Nutzern zugeordnete DPCCH-Kanäle entspreizt und Kt*Ka Koeffizienten von Kt Delays des Delay-Searchers als Antennenimpulsantworten (hA) gebildet werden.

14. Verfahren nach Anspruch 12 oder 13, bei dem die Nachverarbeitung (NV) der Beamformingsignale (BFS) derart erfolgt, dass diese als Beamimpulsantworten (hB) zur Transformation (T) gelangen.

15. Verfahren nach einem der Ansprüche 12 bis 14, bei dem bei der Bildung des Entscheidungssignals (ENTS) als adaptive Filter-Kombinierungsfunktion ein Maximum-Ratio-Combining-Verfahren (MRC) verwendet wird.

16. Verfahren nach einem der Ansprüche 13 bis 15, bei dem im Signalpfad (SP) mit Hilfe des Delay-Searchers (DELS) aus den Eingangssignalen des Signalpfades nutzerspezifische DPDCH-Kanäle entspreizt und Kt*Ka Antennen-Delay-Signale berechnet werden, die mit den korrigierten Impulsantworten (hA') zur Bildung des Entscheidungssignals (ENTS) verwendet werden.

17. Verfahren nach einem der vorhergehenden Ansprüche, bei dem die Berechnung der Antennengewichte (AGEW) mit Hilfe eines Fixed-Beamforming-Verfahrens oder eines Eigenbeamforming-Verfahrens oder einer Kombination daraus erfolgt.
